# EUROPÄISCHE PATENTSCHRIFT

(11) **EP 2 380 443 B1**
(45) Veröffentlichungstag und Bekanntmachung des Hinweises auf die Patenterteilung: **15.02.2017**
(21) Anmeldenummer: 10004267.0
(22) Anmeldetag: 22.04.2010
(51) Int. Cl.: A22C 11/02, A22C 11/00

(54) **Anlage zum Herstellen von Würsten**
System for manufacturing sausages
Installation de fabrication de saucisses

(43) Veröffentlichungstag der Anmeldung: 26.10.2011
(73) Patentinhaber: Tipper Tie technopack GmbH, 21509 Glinde (DE)
(72) Erfinder: Jäckel, Gunnar, 21271 Asendorf (DE)
(74) Vertreter: Glawe, Delfs, Moll

(56) Entgegenhaltungen:
- EP-A1- 2 145 542
- US-A1- 2005 201 340
- US-A1- 2009 130 962

## Beschreibung

Die Erfindung bezieht sich auf eine Anlage zum Herstellen von mittels Verschlussklammern verschlossenen Würsten nach dem Oberbegriff des Schutzanspruchs 1.

Solche Anlagen sind normalerweise modular aufgebaut und umfassen mehrere Vorrichtungen, die miteinander zusammenwirken und dabei unterschiedliche Funktionen erfüllen. Regelmäßig führt eine Füllvorrichtung Wurstbrät über ein Füllrohr einer Verschließvorrichtung zu. Über das Füllrohr ist ein einseitig verschlossener Darm gerafft, in den das Wurstbrät gestoßen wird, so dass der Darm nach und nach durch den Druck des nachstoßenden Bräts vom Füllrohr abgezogen wird. Die Verschließvorrichtung verschließt den Darm abschnittsweise mittels Verschlussklammern, so dass Würste gebildet werden. Die Verschlussklammern werden der Verschließvorrichtung von einer Klammerzufuhrvorrichtung zugeführt, die normalerweise mit der Verschließvorrichtung kombiniert ist. Eine Abfuhrvorrichtung die fertigen Würste auf und führt sie nachfolgenden Bearbeitungsschritten oder einem Lager zu. Die Abfuhrvorrichtung kann ein Förderband oder eine Aufhängevorrichtung umfassen. Auch können mehrere Abfuhrvorrichtungen miteinander kombiniert sein.

Die US 2009/0130962 A1 offenbart eine Füllvorrichtung, die mit einem Datenlesegerät Daten aus einem Speicher an einen Zufuhrcontainer auslesen kann. Über ein Computernetzwerk können weitere Daten über den Container beschafft werden.

Zwischen Füll- und Verschließvorrichtung kann auch noch eine umhüllungsvorrichtung geschaltet sein, die für Sonderanwendungen eine Folie, ein Netz o. dgl. zur Umhüllung der Würste zuführt. Bekannt sind auch Etikettenzufuhrvorrichtungen, die dem Klammerverschlussbereich Etiketten zur Kennzeichnung der Wurstprodukte zuführen und meist mit der Verschließvorrichtung kombiniert sind wie auch Schlaufenzufuhrvorrichtungen zur Zufuhr von Aufhängeschlaufen. Zur Kontrolle von Größe und Gewicht der Wurstprodukte können eine oder mehrere automatisch arbeitende Messvorrichtungen vorhanden sein, ebenso Überwachungvorrichtungen wie z. B. Kameras. Solche Vorrichtungen können auch mit einer der anderen Vorrichtungen kombiniert sein.

Schon seit geraumer Zeit werden solchen Anlagen immer höhere Produktionsgeschwindigkeiten, immer mehr Flexibilität und immer weiter gehende Automatisierung abverlangt. Dieselben Vorrichtungen sollen für verschiedenste Wurstprodukte geeignet sein und möglichst schnell umgerüstet werden können. Zudem sollen sich der Kontrollaufwand durch Bedienpersonen und Risiken aufgrund von Fehlbedienungen minimieren.

Um diese einander widersprechenden Ziele gleichermaßen erreichen zu können, ist ein automatisierter Signalaustausch zwischen den verschiedenen Vorrichtungen erforderlich. Zum einen sollen Steuersignale die Arbeitsabläufe der Vorrichtungen so aufeinander abstimmen, dass die Produktionsgeschwindigkeit optimiert wird, und zwar abgestimmt auf das jeweilige Wurstprodukt (vgl. DE 27 30 603 C3, DE 196 01 720 A1, DE 196 44 074). Zum anderen wird eine automatische Fehlererkennung, beispielsweise fehlerhafte Füllmengen oder Platzer des Darms (DE 196 46 721) immer wichtiger, damit die Anlage unabhängig von einer Bedienperson reagieren und dadurch Schäden und Produktion von Ausschuss entgegenwirken kann.

Zur Ermöglichung dieses Signalaustauschs weisen heutige Anlagen Kommunikationseinrichtungen auf. In der heutigen Praxis bestehen diese aus einer potentialfreien Verkabelung, d. h. pro Signal sind zwei Kabel erforderlich, auf die ein Signalstrom von meist mehr als ... mA gelegt wird. Diese für Signalleitung vergleichsweise hohe Stromstärke ist erforderlich, eine sichere Übertragung zu gewährleisten. Dies erlaubt nur eine rudimentäre Datenverarbeitung, die heutigen Ansprüchen nicht gerecht wird. Es ist insbesondere nicht möglich, eine Fehlfunktion in der Abfuhrvorrichtung automatisch an die Füllvorrichtung zu kommunizieren, damit diese automatisch abschaltet.

An sich läge es nahe, Netzwerktechnologie für die Kommunikationseinrichtung einzusetzen, und es sind auch schon Datenleitungen vorgeschlagen worden (EP 0 962 143 A1). Doch hat sich dies in der Praxis nicht durchgesetzt, da die Umgebungsbedingungen in Wurstproduktionsbetrieben ausgesprochen ungünstig für Datenleitungen sind. Insbesondere Ethernet hat sich nicht bewährt, da die unvermeidbare Feuchtigkeit an den Geräten einer zuverlässigen Signalübertragung im Wege steht. Die Vorrichtungen gattungsgemäßer Anlagen müssen fortlaufend gereinigt werden, was in der Praxis hauptsächlich mit Wasserstrahlen hohen Drucks geschieht (vgl. DE 20 2007 002 666). Dies führt natürlich dazu, dass Feuchtigkeit immer wieder zwischen alle Kontakte gelangen kann.

Der Erfindung liegt die Aufgabe zugrunde, eine zuverlässige Datenübertragung zwischen den Geräten auch unter den widrigen Bedingungen einer Wurstproduktion zu ermöglichen. Sie löst diese Aufgabe durch die Merkmale des Schutzanspruchs 1. Die in den Unteransprüchen enthaltenden Merkmale beziehen sich auf weitere Verbesserungen der Erfindung.

An sich sind von Funkverbindungen in gattungsgemäßen Anlagen keine Vorteile zu erwarten. Denn die Vorrichtungen stehen bei solchen Anlagen im Betrieb dicht und stationär beieinander, so dass ein Anlass für den Einsatz von Funk fehlt. Im Gegenteil, die Nutzung von Funksignalen für die Datenübertragung erscheint noch ungünstiger als eine Datenleitung per Kabel. Erstens beeinträchtigt die vorherrschende Feuchtigkeit auch Funksignale, nicht zuletzt aufgrund der Dunstbildung in der Luft beim Abstrahlen der Vorrichtungen der Anlage oder benachbarter Anlagen mit Schläuchen unter hohem Druck. Zweitens sind diese Vorrichtungen aus hygienischen Gründen weit gehend aus Edelstahl ausgeführt. In fleischverarbeitenden Betrieben gibt es daher viele ausgedehnte metallische Trag- und Gehäuseflächen, die zusammen mit zahlreichen Motoren und anderen elektrisch betriebenen Einrichtungen das Umfeld für Datenfunk erheblich beeinträchtigen. Noch dazu werden die Vorrichtungen innerhalb der Betriebshalle ständig verschoben und umgestellt, was eine Antennenausrichtung erschwert.

Drittens sind die bei Funkübertragung gegenüber kabelgebundener Datenleitung unvermeidlich längeren Latenzzeiten ungünstig für die Steuer- und Fehlersignalübermittlung im Rahmen der vorliegenden Anwendung. Die Latenzzeiten sollten auf den ms-Bereich minimiert werden, damit die Folgen etwa von Darmplatzern so schnell wie möglich abgefangen werden. Angesichts der vorstehend beschriebenen ungünstigen Übertragungsbedingungen ist das jedenfalls mit Sendeleistungen im erträglichen Rahmen schwer zu erreichen. Die Sendeleistungen sollen erfindungsgemäß bevorzugt im Bereich 5 bis 100 mW liegen, um Leistungsaufnahme und Störung anderer Systeme gering zu halten.

Die Erfindung hat erkannt, dass in diesem Leistungsbereich trotz der widrigen Übertragungsbedingungen eine zuverlässige Signalübertragung per Funk möglich ist, wenn auf Sender- und Empfängerseite geeignete Vorkehrungen getroffen werden.

Zum einen müssen die Sende- und Empfangsreinrichtungen der Kommunikationseinrichtung auf eine gemeinsame Systemzeit abstimmbar sein. Dies geschieht vorzugsweise dadurch, dass die Sende- und Empfangseinrichtung einer Vorrichtung eine Master-Clock aufweist, zu der die jede weitere beteiligte Sende- und Empfangseinrichtung beim Verbindungsaufbau einen Clock-Offset ermittelt. Auf diese Weise wird eine Systemzeit geschaffen, die jeder beteiligten Sende- und Empfangseinrichtung bekannt ist.

Des Weiteren werden die zu übertragenden Daten in Datenpakete vorgegebener Länge eingeteilt. Vorgegebene Länge in diesem Sinne bedeutet nicht unbedingt konstante Länge, wenngleich das zur Vereinfachung des Betriebs bevorzugt ist. Es genügt, dass die beteiligten Sende- und Empfangseinrichtungen die Länge des Pakets vor Beginn oder jedenfalls am Ende seiner Übertragung kennen.

Indem überdies die Sende- und Empfangseinrichtzungen zur Übertragung der Datenpakete zu vorgegebenen Systemzeitpunkten eingerichtet sind, kennen die an der jeweiligen Übertragung beteiligten Sende- und Empfangseinrichtzungen den Zeitpunkt des Beginns und aufgrund der bekannten Länge des Endes der Übertragung eines Datenpakets.

Die sendende Einrichtung weiß also, zu welchem Systemzeitpunkt das Datenpaket vollständig empfangen haben muss. Soweit in diesem Zusammenhang von Kenntnis oder Wissen auf Seiten einer Einrichtung die Rede ist, ist damit gemeint, dass die betreffenden Informationen in der Einrichtung elektronisch vorliegen oder ermittelbar sind, so dass sie für eine elektronische Weiterverarbeitung zur Verfügung stehen.

Weil die sendende Einrichtung weiß, zu welchem Systemzeitpunkt eine empfangende Einrichtung ein Datenpaket bei störungsfreier Übertragung erhalten haben wird, kann eine zeitlich genaue Übertragung von in den Datenpaketen enthaltenen Steuersignalen erreicht werden.

Dies kann weiter durch zeitliche Vorverlagerung der Übertragung von Steuersignalen optimiert werden. Weiß z. B. die Füllvorrichtung, dass die Verschließvorrichtung zum Zeitpunkt t_{SV} den Verschließvorgang einleiten sollte, so wird sie das betreffende Steuersignal SV bei bekannten Anlagen zum Zeitpunkt t_{SV} über die Kabelleitung senden. Die erfindungsgemäße Abstimmung auf die Systemzeit hingegen ermöglicht es, dieses Signal schon vorher zu einem Zeitpunkt t_{SV} - Δt_{V} zu übertragen, und zwar zusammen mit dem Zeitpunkt t_{SV}, vorzugsweise im gleichen Datenpaket. Δt_{V} muss dabei mindestens so lang sein, wie die Übertragung eines Datenpakets dauert. Störungen, die zwischen erfolgter Übertragung und dem Zeitpunkt t_{SV} auftreten, können sich dann nicht mehr auswirken, da die Verschließeinrichtung zum Zeitpunkt der Störung schon weiß, zu welchem Systemzeitpunkt sie den Verschließvorgang auszulösen hat.

Vorzugsweise ist die Kommunikationseinrichtung so ausgelegt, dass sie Steuersignale zusammen mit ihren Zeitpunkten t während des Vorsprungsintervalls Δt_{V} mehrfach in zeitlich aufeinanderfolgenden Datenpaketen sendet. Es genügt dann eine ordnungsgemäße Übertragung, so dass die Anlage auch bei Beeinträchtigungen der Funkverbindung einwandfrei arbeiten kann. Δt_{V} muss dabei länger als die Übertragungszeit für ein Datenpaket sein, vorzugsweise sollte Δt_{V} länger als die Übertragungszeit für drei Datenpakete sein. Da die Vorrichtungen gattungsgemäßer Anlagen im Rahmen derselben Anwendung periodisch arbeiten, ist das möglich.

Diese vorverlagerte Übertragung von Steuersignalen erweist sich insbesondere für die frühzeitige Mitteilung des Aufbrauchs von Wurstbrät, Verpackungsmaterialien oder sonstigem zu verarbeitenden Gut wie Etiketten o. dgl. als vorteilhaft. Für derlei Gut weisen gattungsgemäße Anlagen Vorratseinrichtungen auf, also etwa einen Trichter für das Wurstbrät in der Füllvorrichtung, ein Klammermagazin in der Klammerzufuhrvorrichtung usw. Die Vorrichtungen können automatisch erfassen, wann ein Vorrat zur Neige geht, etwa durch einen geeignet angeordneten Sensor oder durch Erfassung des Verbrauchs nach vorgegebener Füllmenge. Sie wissen dadurch geraume Zeit vor dem tatsächlichen Aufbrauch, zu welchem Systemzeitpunkt der jeweilige Vorrat endgültig erschöpft ist, so dass es ohne weiteres möglich ist, diesen Zeitpunkt mit einem hinreichend großen Vorsprungsintervall Δt zusammen mit einem Steuersignal AG für den Aufbrauch des jeweiligen Guts anderen Vorrichtungen mitzuteilen, so dass diese dann ihren Betrieb unterbrechen können.

Logisch gesehen ist der Speicherplatz für Würste in einer Aufhängevorrichtung auch ein Vorrat in diesem Sinne. Weiß also diese Vorrichtung, etwa mittels geeigneter Sensoren o. dgl., zu einem Systemzeitpunkt t_{N}, dass nur noch N Würste aufgenommen werden können, so weiß sie auch, dass zum Systemzeitpunkt t_{N} + Δt_{V} die Aufnahmekapazität erschöpft sein wird und der Betrieb der Anlage unterbrochen werden muss. Also beginnt sie bereits zum Zeitpunkt t_{N} mit der Übertragung von Datenpaketen, die ein Steuersignal KE für das Erreichen der Aufnahmekapazität zusammen mit dem Systemzeitpunkt t_{N} + Δt_{V} enthalten.

Die Eigenschaften gattungsgemäßer Anlagen bringen es also mit sich, dass jedenfalls für die meisten Steuersignale mit geeigneten Vorsprungintervallen gearbeitet werden kann. Die Erfindung hat erkannt, dass es über die Schaffung einer Systemzeit möglich ist, diese Vorsprungintervalle eine Signalübertragung in Echtzeit zu simulieren, was an sich mit Funkverbindungen im gegebenen Umfeld nicht mit befriedigender Zuverlässigkeit möglich ist.

Für Fehlersignale nützen Vorsprungintervalle natürlich wenig. Doch lässt sich die Abstimmung auf eine Systemzeit auch für diese Signale gezielt nutzen. Dafür werden sie logisch invertiert, d. h. Fehlfunktionen werden dadurch mitgeteilt, dass ein Betriebssignal, das eine Vorrichtung während ihres ordnungsgemäßen Betriebs zu vorbestimmten Zeitpunkten aussendet, ausbleibt. Aufgrund der gemeinsamen Systemzeit wissen andere Vorrichtungen, wenn mit welchem Datenpaket ein bestimmtes Betriebssignal eingehen muss, damit sie von ordnungsgemäßem Betrieb der anderen Vorrichtung ausgehen können. Bleibt es aus, entspricht dies dem Empfang eines Fehlersignals. Auf diese Weise kann die Mitteilung von Fehlfunktionen nicht von Störungen der Funkverbindung behindert werden. Natürlich ist nicht ausgeschlossen, daneben "richtige Fehlersignale" zu übermitteln, also Datenpakete ad hoc dann auszusenden, wenn es zu einem bestimmten Fehler gekommen ist, etwa um die Art der Fehlfunktion mitzuteilen.

Vorteilhafterweise ist wenigstens eine Zufuhrvorrichtung der erfindungsgemäßen Anlage zum automatischen Abschalten nach Ausbleiben eines Betriebssignals der ihr nachgeschalteten Vorrichtung eingerichtet. Auf diese Weise lässt sich in einfacher und effektiver Weise ein Notaus realisieren. Zusätzlich oder stattdessen kann auch bei Ausbleiben des Betriebssignals ein Warnsignal an andere Vorrichtungen oder, etwa als Licht- oder Schallsignal oder per Funk, an die Bedienperson ausgegeben werden.

Es ist auch möglich, die Kommunikationseinrichtung so auszulegen, dass ein Betriebssignal in mehreren zeitlich aufeinanderfolgenden Datenpaketen übertragen wird, die vorzugsweise alle in einem vorbestimmten Zeitintervall, dem Betriebssignalintervall Δt_{B}, liegen, und die empfangende Einrichtung einen ordnungsgemäßen Empfang annimmt, wenn eines der Datenpakete störungsfrei übertragen wurde. Hierdurch kann die Robustheit gegenüber Funkstörungen gesteigert werden.

Diese Übertragung von Fehlersignalen ist besonders für Zufuhrvorrichtungen von Bedeutung. Hierunter sind diejenigen Vorrichtungen einer erfindungsgemäßen Anlage zu verstehen, die anderen Vorrichtungen der Anlage etwas zuführen, insbesondere Wurstbrät, Verpackungsmaterialien oder Würste. So führt eine Füllvorrichtung der Verschließvorrichtung Wurstbrät und mit diesem auch Darm zu. Die Klammerzufuhreinrichtung führt der Verschließvorrichtung Verschlussklammern zu, die Umhüllungsvorrichtung Folien u. dgl., und die Verschließvorrichtung ihrerseits führt der Abfuhreinrichtung die verschlossenen Würste zu.

Eine solche Zufuhreinrichtung ist besonders auf eine schnelle Übertragung von Fehlersignalen der ihr nachgeschalteten Vorrichtung angewiesen. Insbesondere wenn es etwa in der Verschließvorrichtung zu einem Darmplatzer kommt, dann muss die Füllvorrichtung schnellstmöglich ihren Betrieb unterbrechen. Auch ist ein absichtliches oder unabsichtliches Verschieben einer Aufhängevorrichtung so schnell wie möglich der Verschließvorrichtung und auch der Füllvorrichtung sowie den sonstigen vorgeschalteten Zufuhreinrichtungen mitzuteilen, damit alle den Betrieb unterbrechen oder ggf. verlangsamen. Um ein solches Verschieben zuverlässig in ein Fehlersignal umzusetzen, weist die erfindungsgemäße Anlage vorteilafterweise Positionssensoren auf, die die Relativposition von Vorrichtungen, insbesondere einer Aufhängevorrichtung, zu ihren vorgeschalteten Vorrichtungen erfassen.

Wie sehr sich auf diese Weise erhöht der Bedienkomfort erhöht, zeigt sich insbesondere bei Anlagen mit Aufhängevorrichtungen. So kann eine Bedienperson, die erkennt, dass die Aufhängevorrichtung gefüllt ist oder kurz davor steht, diese einfach wegziehen, selbst wenn die Anlage noch in Betrieb ist. Aufgrund der automatischen und raschen Signalübertragung können alle Zufuhreinrichtungen ihren Betrieb selbstständig unterbrechen, ohne dass die Bedienperson etwas zu veranlassen hat. Die Kommunikationseinrichtung ist ferner vorteilhafterweise eingerichtet, ein Steuersignal FS auszudenen, wenn eine Aufhängevorrichtung wieder in Arbeitsposition gelangt ist. Dieses Steuersignal FS veranlasst die Vorrichtungen der Anlage, sich wieder in Gang zu setzen. Dafür erfordert dieses Signal kein Vorsprungintervall. Fährt die Bedienperson also eine wieder leere Aufhängevorrichtung dann wieder in Position, fährt die Anlage wieder an. Die Bedienperson kann also die Aufhängevorrichtung austauschen, ohne auf der Anlage näher ausgebildet zu sein.

Unerheblich ist, ob das Signal, das eine Vorrichtung an eine bestimmte andere Vorrichtung der Anlage übermittelt, in einem oder mehreren Datenpaketen direkt zwischen den Sende- und Empfangseinrichtungen zwischen diesen beiden Vorrichtungen übertragen wird oder ob es seinen Weg indirekt über die Sende- und Empfangseinrichtungen anderer Vorrichtungen nimmt. Ersteres hat offensichtlich Geschwindigkeitsvorteile, erschwert aber die Antennenausrichtung. Natürlich ist es auch denkbar sowohl den direkten als auch den indirekten Übertragungsweg zu wählen, um Redundanzen zu schaffen. Denkbar ist insbesondere, dass jedes Datenpaket an jede Sende- und Empfangsreinrichtung der Anlage übertragen wird.

Die Erfindung ist bereits dann verwirklicht, wenn sich zwei Vorrichtungen einer Anlage über die erfindungsgemäße Kommunikationseinrichtung austauschen, darunter eine Zufuhrvorrichtung. Denn bereits dann stellen sich die erfindungsgemäßen Vorteile ein. Insbesondere ist es vorteilhaft, wenn Füllvorrichtung und Verschließvorrichtung und ggf. noch eine Ablaufvorrichtung über die Kommunikationseinrichtung kommunizieren. Im Übrigen hängt es von den Gegebenheiten ab, ob eine Vorrichtung über die Kommunikationseinrichtung oder in anderer Weise angeschlossen ist oder per Hand überwacht sein. So kann es beispielsweise bei einem mit der Verschließvorrichtung verbundenen Klammermagazin sinnvoller sein, die Steuerung der Verschließvorrichtung über ein Kabel mit einem Sensor am Magazin zu verbinden. Ist beispielsweise ein Schlaufenvorrat hinreichend groß, dass es in hinreichend großen Abständen zum Aufbrauch kommt, und arbeitet die Schlaufenzufuhrvorrichtung hinreichend zuverlässig, dann ist eine Einbindung dieser Vorrichtung in die Kommunikation der Anlage nicht unbedingt angezeigt.

Als Vorsprungsintervall Δt_{V} kann vorteilhafterweise ein ganzzahliges Vielfaches (ggf. auch Einfaches) des Übertragungsintervalls gewählt werden. Das Übertragungsintervall ist die Anzahl an Takten der Systemzeit, die bei störungsfreiem Betrieb für die Übertragung eines Datenpakets zwischen zwei Sende- und Empfangseinrichtungen benötigt wird. Die Länge des Übertragungsintervalls sollte bevorzugt nicht mehr als 5 ms, weiter bevorzugt nicht mehr als 1 ms, betragen, um den Einfluss von Störungen gering zu halten und kurze Ansprechzeiten der Steuerung der Anlage zu ermöglichen.

Die Länge des Vorsprungsintervalls Δt_{V} kann von der Art des jeweiligen Steuersignals abhängig sein. Besonders bevorzugt ist es, wenn das Vorsprungsintervall für wenigstens ein Steuersignal mindestens das Drei-, weiter vorzugsweise mindestens das Vierfache des Übertragungsintervalls beträgt.

Entsprechend kann für das Betriebssignalintervall Δt_{B} vorteilhafterweise ein ganzzahliges Vielfaches (ggf. auch Einfaches) des Übertragungsintervalls gewählt werden. Vorteilhafterweise ist die Kommunikationseinrichtung zum mehrfachen Versenden gleicher Datenpakete innerhalb vorgegebener Zeitintervalle eingerichtet. In diesem Fall ist es weiter vorteilhaft, wenn die Kommunikationsreinrichtung zur Überprüfung der Fehlerfreiheit der Übermittlung von Datenpaketen und im Fall der Feststellung eines Fehlers zum erneuten Versenden des betreffenden Datenpakets eingerichtet ist.

Vorteilhafterweise weist zumindest eine Sende- und Empfangseinrichtung eine Antenne mit einer Abstrahlcharakteristik mit maximaler Intensität in einer Funkebene auf. Diese Funkebene lässt sich dazu nutzen, die Antennen der Kommunikationseinrichtung so auszurichten, dass Störungen minimiert werden. Dies wird besonders dann schnell gelingen, wenn die Funkebene vertikal liegt. Vertikal in diesem Sinne ist auch noch eine Ebene, die mit der Senkrechten einen Winkel von ± 20° einschließt. Bei solcher Ausrichtung sind eher geringe Einflüsse anderer Funkverbindungen, z. B. eines im Betrieb bereits vorhandenen WLANs, zu erwarten.

Es ist ferner günstig für die Übertragungsqualität, wenn wenigstens zwei weitere, vorzugsweise sämtliche beteiligte, Sende- und Empfangseinrichtungen mit einer Toleranz von ± 30 cm in besagter Funkebene liegen. In diesem Fall ist es besonders vorteilhaft, wenn die weiteren Sende- und Empfangseinrichtungen ebenfalls Antennen mit Abstrahlcharakteristiken mit maximaler Intensität in einer Ebene aufweisen. Außerdem ist es in diesen Fällen vorteilhaft, wenn die Antennen dieser Sende- und Empfangseinrichtungen an einer konvex gekrümmten Verbindungslinie in der Ebene liegen. In diesem Fall hat jede der Antennen "Blickkontakt" mit einer anderen, d. h. von jeder der Antennen lässt sich eine gedachte Verbindungsgerade zu jeder der anderen ziehen, die nicht durch eine andere Antenne unterbrochen ist. Weiter bevorzugt sollten die Antennen dann so angeordnet sein, dass die Verbindungsgeraden auch nicht durch andere Teile der Vorrichtungen unterbrochen sind. Insbesondere ist es vorteilhaft, wenn die Funkebene frei von Teilen der Vorrichtungen ist.

Die Sendeleistung wenigstens einer der Sende- und Empfangseinrichtungen beträgt bevorzugt mindestens 5 mW, weiter bevorzugt mindestens 10 mW.

Ein Positionssensor zur Bestimmung der Relativposition einer Vorrichtung zu einer anderen ist vorzugsweise an einer der Vorrichtungen angeordnet, die dann auch eine Steuereinheit aufweist, welche eingerichtet ist, Informationen über die Relativposition in Datenpakten über die Sende- und Empfangseinrichtung zu versenden. Vorteilhafterweise ist diesem Sensor ein Passivelement an der Vorrichtung zugeordnet, zu der die Relativposition bestimmt werden soll, z. B. ein Magnet oder ein Transponder. Um auch die Winkellage der beiden Vorrichtungen zu erfassen, umfasst die erstgenannte Vorrichtung bevorzugt mindestens zwei Positionssensoren. In diesem Fall kann die letztgenannte Vorrichtung Passivelemente in entsprechender Anzahl aufweisen. Allerdings können auch mehrere Positionssensoren auf ein Passivelement abgestimmt sein.

Nachfolgend wird ein Ausführungsbeispiel der Erfindung anhand von Zeichnungen erläutert. Dabei zeigen:
- Fig. 1: eine schematische Seitenansicht einer erfindungsgemäßen Anlage mit erfindungsgemäßen Vorrichtungen;
- Fig. 2: die Anordnung der Antennen aus Fig. 1 mit einer gedachten Verbindungslinie;
- Fig. 3: eine Prinzipdarstellung der Übertragung eines Steuersignals gemäß der Erfindung.

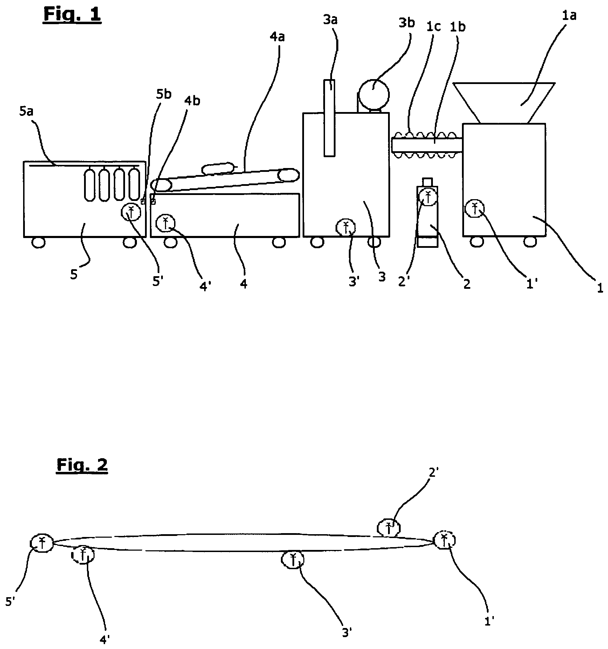

Fig. 1 zeigt rechts eine Füllvorrichtung 1, in die durch einen Trichter 1a Wurstbrät gefüllt wird, dass die Füllvorrichtung dann durch ein Füllrohr 1b pumpt. Auf das Füllrohr ist ein Darm 1c gerafft. Eine Kamera 2 überwacht als Überwachungsvorrichtung, ob der Darm ordnungsgemäß abgezogen wird oder das Darmende erreicht ist.

Stromabwärts des Füllrohrs befindet sich eine Verschließvorrichtung 3, die mit einem Klammermagazin 3a und einer Zufuhreinrichtung für Aufhängeschlaufen mit einer Schlaufenvorratstrommel 3b kombiniert ist. Der Verschließvorrichtung übernimmt den gefüllten Endlosdarm 1c vom Füllrohr 1b, schnürt ihn abschnittsweise ein, verschließt die Abschnittsenden mit Verschlussklammern, wobei in eine der Klammern eine Aufhängeschlaufe eingelegt wird. Die so gebildeten Würste werden getrennt und dem Laufband 4a einer Abfuhrvorrichtung 4 zugeführt. Dieser ersten Abfuhrvorrichtung 4 ist eine Aufhängevorrichtung 5 nachgeschaltet, die die Würste selbsttätig an Stangen 5a aufhängt. Denkbar ist auch, die Aufhängevorrichtung 5 direkt hinter der Verschließvorrichtung 3 anzuordnen. Ein zwischengeschaltetes Laufband 4a kann aber unterschiedliche Arbeitsgeschwindigkeiten, etwa beim Wechsel der Stange 5a der Aufhängevorrichtung, ausgleichen.

Die Kamera 2 steht in diesem Beispiel fest auf dem Boden, kann aber aufgrund ihres geringen Gewichts leicht bewegt werden. Die übrigen Vorrichtungen stehen auf Rollen, können also leicht verschoben und somit mit anderen Vorrichtungen zu anderen Anlagen zusammengestellt werden.

Sämtliche Vorrichtungen 1, 2, 3, 4 und 5 sind mit Funkantennen 1', 2', 3', 4' bzw. 5' ausgestattet. Diese Funkantennen 1', 2', 3', 4' und 5' sind über entsprechende Sende- und Empfangselektronik, die auch die Abstimmung auf eine Systemzeit besorgt, (nicht gezeigt) an die jeweilige Steuerungseinheit der Vorrichtungen (nicht gezeigt) angeschlossen und bilden somit jeweils Sende- und Empfangseinrichtungen und zusammen eine Kommunikationseinrichtung für die Anlage.

Die Aufhängevorrichtung 5 weist als Positionssensor einen Näherungsschalter 5b auf, der das Magnetfeld eines Magneten 4b an der Abfuhrvorrichtung 4 misst. Der Näherungsschalter 5b ist mit der Steuereinheit der Aufhängevorrichtung 5 verbunden, so dass diese die Relativposition zur Abfuhrvorrichtung 4 bestimmen und über die Kommunikationseinrichtung ein Haltesignal an die übrigen Vorrichtungen 1, 2, 3 und 4 senden kann, falls die Relativposition nicht der Arbeitsposition entspricht. Um auch die winkellage der Vorrichtungen 4 und 5 richtig zu erfassen, ist auf der zur Zeichenebene senkrechten Linie durch den Schalter 5b ein zweiter (nicht dargestellter) Näherungsschalter an der Aufhängevorrichtung 5 angeordnet.

Bei den Antennen 1', 2', 3', 4' und 5' handelt es sich um Rundstrahlantennen. Sie sind so an den zueinander ausgerichteten Gehäusewänden der Vorrichtungen 1, 2, 3, 4 und 5 angeordnet, dass sich ihre Abstrahlcharakteristiken in einer vertikalen Ebene befinden (das in den Zeichnungen verwendete Antennensymbol ist insoweit nicht maßgeblich). Die Antennen 1', 2', 3', 4' und 5' sind aber in flache Gehäuseteller eingefasst, die flach in die Gehäusewände eingelassen sind, so dass keine Stoßgefahr besteht.

Wie man weiter Fig. 2 entnimmt, liegen die Antennen an einer konvex gekrümmten Verbindungslinie, so dass jede der Antennen 1', 2', 3', 4' und 5' "Blickkontakt" mit jeder anderen hat. Beeinträchtigungen durch Störungen werden durch diese Konfiguration minimiert.

Die Sende- und Empfangseinrichtungen können einem Funkstandard entsprechen. Eine Auswahl von Standards ist beispielsweise in c't 2/2005, S. 128 ff. vorgestellt, darunter auch Bluetooth, allerdings sollte im Fall von Bluetooth vorteilhafterweise der L2CAP-Modus umgangen werden, da in diesem Modus keine Latenzzeiten garantiert werden können.

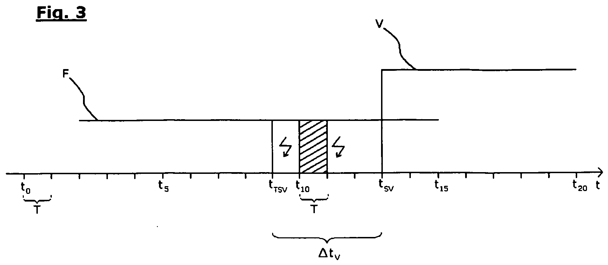

In Fig. 3 ist der zeitliche Übergang vom Füllen zum Verschließen innerhalb einer erfindungsgemäßen Anlage veranschaulicht. Auf einem Zeitstrahl t ist ein Ausschnitt aus der Systemzeit beginnend zu einem Systemzeitpunkt t₀ dargestellt. Ein Datenpaket benötigt die Zeit T, um ohne Störung zwischen zwei Sende- und Empfangsreinrichtungen übertragen zu werden. Diesem Übertragungsintervall T entspricht im Ausführungsbeispiel der Einfachheit halber der Systemzeittakt, auf den alle Vorrichtungen der Anlage eingestellt sind.

Die Füllvorrichtung der Anlage beginnt bei t₂ mit dem Füllen. Dieser Vorgang dauert bis t₁₅. Bereits zwei Systemzeittakte T vor Abschluss des Füllvorgangs soll bei t_{SV} = t₁₃ der Verschließvorgang ausgelöst werden. Denn vom Ingangsetzen der Organe der Verschließvorrichtung bis zur Einwirkung auf den Wurstdarm verstreicht eine gewisse Zeitspanne, so dass ein Überlapp der Bewegungen die Geschwindigkeit optimiert. Der Füllvorgang ist mit einer waagerechten Linie F und der Verschließvorgang mit einer waagerechten Linie V symbolisiert.

Bei normalem Verlauf des Füllvorgangs weiß die Füllvorrichtung bereits sechs Zeittakte vor Ende dieses Vorgangs, dass der Verschließvorgang bei t_{SV} = t₁₃ zu starten ist. Sie beginnt daher bei t_{TSV} = t_{SV} - Δt_{V} mit Δt_{V} = 4T mit der Übersendung eines für die Sende- und Empfangsvorrichtung bestimmten Datenpakets, in dem das Signal SV zusammen mit Informationen über den Auslösezeitpunkt t_{SV} enthalten sind. Dieser Zeitpunkt wird beispielsweise durch die Daten t_{SV} und Δt_{V} eindeutig festgelegt.

Die Übertragung dieses Datenpakets misslingt im dargestellten Beispiel aufgrund einer Störung der Funkverbindung im ersten Übertragungstakt. Die Störung ist durch einen Blitz symbolisiert. Die Übertragung gelingt dann aber beim nächsten Takt. Eine darauf erfolgende weitere Störung zwischen dieser Übertragung und t_{SV} kann sich dann nicht mehr auswirken.

## Patentansprüche

1. Anlage zum Herstellen von mittels Verschlussklammern verschlossenen Würsten umfassend eine Zufuhrvorrichtung (1, 2, 3, 4) sowie wenigstens eine weitere Vorrichtung (1, 2, 3, 4, 5) und eine Kommunikationseinrichtung zum Austausch von Daten zwischen den Vorrichtungen (1, 2, 3, 4, 5), **dadurch gekennzeichnet, dass** die Kommunikationseinrichtung Sende- und Empfangsreinrichtungen für Funksignale umfasst, welche auf eine gemeinsame Systemzeit abstimmbar und zur Übermittlung von Datenpaketen vorgegebener Länge und zu vorgegebenen Systemzeitpunkten eingerichtet sind.

2. Anlage nach Patentanspruch 1, **dadurch gekennzeichnet, dass** die Kommunikationsvorrichtung eingerichtet ist, Steuersignale, die von einer Vorrichtung (1, 2, 3, 4, 5) ausgegeben werden, um in einer anderen Vorrichtung (1, 2, 3, 4, 5) zu einem bestimmten Systemzeitpunkt einen Vorgang auszulösen, zu einem um ein Vorsprungsintervall früheren Zeitpunkt in einem Datenpaket zu versenden, wobei die Länge des Vorsprungsintervalls mindestens der Dauer der Übermittlung eines Datenpakets entspricht und das Datenpaket auch Informationen über den genannten Systemzeitpunkt enthält.

3. Anlage nach einem der vorstehenden Patentansprüche,
**dadurch gekennzeichnet, dass** wenigstens eine der Vorrichtungen (1, 2, 3, 4, 5) zur regelmäßigen Versendung von Betriebssignalen und eine ihr vorgeschaltete Zufuhrvorrichtung (1, 2, 3, 4)zur Überwachung des Empfangs dieser Betriebssignale eingerichtet ist.

4. Anlage nach Patentanspruch 3, **dadurch gekennzeichnet, dass** die Zufuhrvorrichtung (1, 2, 3, 4) zum automatischen Abschalten nach Ausbleiben eines Betriebssignals der ihr nachgeschalteten Vorrichtung (1, 2, 3, 4, 5) eingerichtet ist.

5. Anlage nach einem der vorstehenden Patentansprüche,
**dadurch gekennzeichnet, dass** die Kommunikationseinrichtung zum mehrfachen Versenden gleicher Datenpakete innerhalb vorgegebener Zeitintervalle eingerichtet ist.

6. Anlage nach einem der vorstehenden Patentansprüche,
**dadurch gekennzeichnet, dass** zumindest eine Sende- und Empfangseinrichtung eine Antenne (1', 2', 3', 4', 5') mit einer Abstrahlcharakteristik mit maximaler Intensität in einer Funkebene aufweist.

7. Anlage nach Patentanspruch 6, **dadurch gekennzeichnet, dass** die Funkebene vertikal liegt.

8. Anlage nach einem der Patentansprüche 6 oder 7, **dadurch gekennzeichnet, dass** wenigstens zwei weitere Sende- und Empfangseinrichtungen mit einer Toleranz von ± 30 cm in der Funkebene liegen.

9. Anlage nach Patentanspruch 8, **dadurch gekennzeichnet,**
**dass** die beiden weiteren Sende- und Empfangseinrichtungen ebenfalls Antennen (1', 2', 3', 4', 5') mit Abstrahlcharakteristiken mit maximaler Intensität in einer Ebene aufweisen.

10. Anlage nach einem der Ansprüche 8 oder 9, **dadurch gekennzeichnet, dass** die Antennen (1', 2', 3', 4', 5') der drei Sende- und Empfangseinrichtungen an einer konvex gekrümmten Verbindungslinie liegen.

## Claims

1. Installation for manufacturing sausages sealed by means of closure clips, comprising a feed apparatus (1, 2, 3, 4) and also at least one further apparatus (1,2, 3, 4, 5) and a communication device for exchanging data between the apparatuses (1, 2, 3, 4, 5), **characterized in that** the communication device comprises transmission and reception devices for radio signals that are tuneable to a common system time and are configured to transmit data packets of prescribed length and at prescribed system times.

2. Installation according to Patent Claim 1, **characterized in that** the communication apparatus is configured to send control signals that are output by an apparatus (1, 2, 3, 4, 5), in order to initiate a process in another apparatus (1, 2, 3, 4, 5) at a particular system time, at a time that is earlier by a lead interval, in a data packet, the length of the lead interval corresponding at least to the duration of transmission of a data packet, and the data packet also containing information about said system time.

3. Installation according to either of the preceding patent claims, **characterized in that** at least one of the apparatuses (1, 2, 3, 4, 5) is configured to regularly send operating signals and a feed apparatus (1, 2, 3, 4) connected upstream of said apparatus(es) is configured to monitor reception of these operating signals.

4. Installation according to Patent Claim 3, **characterized in that** the feed apparatus (1, 2, 3, 4) is configured to automatically switch off after an operating signal from the apparatus (1, 2, 3, 4, 5) connected downstream of said feed apparatus fails to appear.

5. Installation according to one of the preceding patent claims, **characterized in that** the communication device is configured to repeatedly send the same data packets within prescribed time intervals.

6. Installation according one of the preceding patent claims, **characterized in that** at least one transmission and reception device has an antenna (1', 2', 3', 4', 5') having a radiation characteristic with maximum intensity in a radio plane.

7. Installation according to Patent Claim 6, **characterized in that** the radio plane is situated vertically.

8. Installation according to either of Patent Claims 6 and 7, **characterized in that** at least two further transmission and reception devices are situated in the radio plane with a tolerance of ± 30cm.

9. Installation according to Patent Claim 8, **characterized in that** the two further transmission and reception devices likewise have antennas (1', 2', 3', 4' 5') having radiation characteristics with maximum intensity in a plane.

10. Installation according to either of Claims 8 and 9, **characterized in that** the antennas (1', 2', 3' 4', 5') of the three transmission and reception devices are situated on a convexly curved connecting line.

## Revendications

1. Installation destinée à la réalisation de saucisses fermées au moyen d'agrafes de fermeture, comprenant un dispositif d'amenée (1, 2, 3, 4) ainsi qu'au moins un autre dispositif (1, 2, 3, 4, 5) et un équipement de communication pour l'échange de données entre les dispositifs (1, 2, 3, 4, 5), **caractérisée en ce que** l'équipement de communication comprend des systèmes d'émission et de réception pour des signaux radio qui peuvent être accordés à un temps de système commun et qui sont agencés pour la transmission de paquets de données de longueur prédéfinie et à des instants de système prédéfinis.

2. Installation selon la revendication 1, **caractérisée en ce que** l'équipement de communication est agencé pour envoyer dans un paquet de données des signaux de commande, qui sont délivrés par un dispositif (1, 2, 3, 4, 5) pour déclencher un processus dans un autre dispositif (1, 2, 3, 4, 5) à un instant de système défini, à un instant qui est antérieur selon un intervalle d'avance, la longueur de l'intervalle d'avance correspondant au moins à la durée de la transmission d'un paquet de données, et le paquet de données contenant également des informations sur l'instant de système cité.

3. Installation selon l'une des revendications précédentes, **caractérisée en ce qu'**au moins un des dispositifs (1, 2, 3, 4, 5) est agencé pour l'envoi régulier de signaux de fonctionnement, et un dispositif d'amenée (1, 2, 3, 4) monté en amont est agencé pour la surveillance de la réception de ces signaux de fonctionnement.

4. Installation selon la revendication 3, **caractérisée en ce que** le dispositif d'amenée (1, 2, 3, 4) est agencé pour la coupure automatique après l'absence d'un signal de fonctionnement du dispositif (1, 2, 3, 4, 5) monté en aval.

5. Installation selon l'une des revendications précédentes, **caractérisée en ce que** l'équipement de communication est agencé pour l'envoi multiple de paquets de données identiques à l'intérieur d'intervalles de temps prédéfinis.

6. Installation selon l'une des revendications précédentes, **caractérisée en ce qu'**au moins un équipement d'émission et de réception présente une antenne (1', 2', 3', 4', 5') avec une caractéristique de rayonnement ayant une intensité maximale dans un niveau radio.

7. Installation selon la revendication 6, **caractérisée en ce que** le niveau radio est vertical.

8. Installation selon l'une des revendications 6 ou 7, **caractérisée en ce qu**'au moins deux autres équipements d'émission et de réception sont dans le niveau radio avec une tolérance de ± 30 cm.

9. Installation selon la revendication 8, **caractérisée en ce que** les deux autres équipements d'émission et de réception présentent également des antennes (1', 2', 3', 4', 5') avec des caractéristiques de rayonnement ayant une intensité maximale dans un niveau radio.

10. Installation selon l'une des revendications 8 ou 9, **caractérisée en ce que** les antennes (1', 2', 3', 4', 5') des trois équipements d'émission et de réceptions sont sur une ligne de liaison courbée de façon convexe.
